# EUROPEAN PATENT SPECIFICATION

(11) **EP 2 625 070 B1**
(45) Date of publication and mention of the grant of the patent: **25.02.2015**
(21) Application number: 10858027.5
(22) Date of filing: 09.10.2010
(51) Int. Cl.: B60R 21/205, B60R 21/2165

(54) **TRIM ELEMENT FOR MOTOR VEHICLE ADAPTED TO OPTIMUM DEPLOYMENT OF INFLATABLE BAG DEVICE**
FÜR DIE OPTIMALE ENTFALTUNG EINER AIRBAGVORRICHTUNG ADAPTIERTES VERKLEIDUNGSELEMENT FÜR EIN KRAFTFAHRZEUG
ÉLÉMENT D'AMÉNAGEMENT INTÉRIEUR POUR VÉHICULE AUTOMOBILE ADAPTÉ AU DÉPLOIEMENT OPTIMAL D'UN DISPOSITIF DE SAC GONFLABLE

(43) Date of publication of application: 14.08.2013
(73) Proprietor: Faurecia Intérieur Industrie, 92000 Nanterre (FR)
(72) Inventor: WANG, Kevin, Shanghai 200237 (CN); MEZIERE, Jérôme, F-95000 CERGY (FR); MUNCH, Thierry, F-93600 Aulnay sous Bois (FR)
(74) Representative: Domenego, Bertrand
(86) International application number: PCT/CN2010/001580
(87) International publication number: WO 2012/045197

(56) References cited:
- EP-A2- 0 819 584
- CN-A- 101 198 491
- CN-Y- 201 390 221
- DE-A1- 10 306 385
- US-A1- 2007 246 918
- US-A1- 2010 213 691

## Description

The present invention relates to a trim element for a motor vehicle, of the type comprising a rigid supporting member and a flexible covering member covering the supporting member, the covering member comprising a skin intended to be visible by an occupant of the passenger compartment of the motor vehicle, the supporting member comprising at least one aperture allowing the deployment of an inflatable bag device outwards from the trim element, a rigid frame being attached to the supporting member on the periphery of said aperture by several attachment means, a flap covering the aperture being jointed with said frame.

Such a trim element is for example intended for covering a dashboard of a motor vehicle.

It is now common to fit motor vehicles with inflatable bag devices, better known as airbags. Such devices are generally housed in the dashboards of vehicles, by being most often concealed under a trim element covering the dashboard.

During its deployment, the airbag shall therefore passes through the trim element which covers it, and this is generally accomplished by tearing a portion of the trimming member, thereby clearing a passage for the inflatable bag towards the passenger compartment. The trim element should therefore be designed so as to tear properly, in order to allow optimum deployment of the airbag and to avoid projections of material from the trim element into the passenger compartment, projections which may injure the occupants of the vehicle.

To do this, it is known how to create a weakening area in the trim element in order to limit the tearing. During its deployment, the inflatable bag acts on a flap which in turn acts on the weakening area, which allows the tearing to be controlled.

However, in known devices, the tearing is not optimally controlled and there remain risks of projections into the passenger compartment.

The document US 2007/246918 A1 discloses a trim element of the precited type.

An object of the invention is to overcome these drawbacks of the state of the art by proposing a motor vehicle trim element in which the tearing of the element during the deployment of the inflatable bag is accomplished in a controlled way so as to avoid material projections of the trim element into the passenger compartment.

For this purpose, the object of the invention is a motor vehicle trim element of the aforementioned type, characterized in that the frame comprises a continuous rib extending from the frame in the covering member, said rib extending along at least one portion of the frame, including above at least one portion of the attachment means. element in order to limit the tearing. During its deployment, the inflatable bag acts on a flap which in turn acts on the weakening area, which allows the tearing to be controlled.

However, in known devices, the tearing is not optimally controlled and there remain risks of projections into the passenger compartment.

An object of the invention is to overcome these drawbacks of the state of the art by proposing a motor vehicle trim element in which the tearing of the element during the deployment of the inflatable bag is accomplished in a controlled way so as to avoid material projections of the trim element into the passenger compartment.

For this purpose, the object of the invention is a motor vehicle trim element of the aforementioned type, characterized in that the frame comprises a continuous rib extending from the frame in the covering member, said rib extending along at least one portion of the frame, including above at least one portion of the attachment means.

The trim element according to the invention may also comprise one or several of the following features taken separately or according to all technically possible combination(s):
- the frame comprises a rigid edge with a general annular shape extending along at least one portion of the periphery of the aperture, said edge comprising at least one ribbed portion comprising a first portion of the rib, and at least one attachment portion, distinct from the or each ribbed portion, the or each attachment portion being fastened to the supporting member by an attachment means, and the frame comprises at least one covering tab extending between an attachment portion and the skin, the or each covering tab comprising a second portion of the rib, the first and the second portion of the rib extending in the continuity of each other;
- the or each covering tab is riveted, clinched, crimped or welded to the edge;
- the edge and the or each covering tab are made integral from the same material;
- the or each covering tab is a folded portion of the edge;
- the frame comprises a rigid edge with a general annular shape extending along at least one portion of the periphery of the aperture, said edge comprising at least one continuous ribbed portion comprising at least one continuous portion of the rib, and the frame comprises at least one attachment tab, fastened to the supporting member by one of the attachment means, the attachment tab extending between a ribbed portion of the edge and the supporting member;
- the or each attachment tab is riveted, clinched, crimped or welded to the edge;
- the or each assembly consisting of an attachment tab and of the associated attachment means is stamped with the edge;
- the attachment means comprise screws and/or rivets;
- the rib extends along an inner peripheral edge of the frame.

The object of the invention is also a motor vehicle comprising a trim element as defined above.

Other features and advantages of the invention will become apparent upon reading the description which follows, only given as an example and made with reference to the appended drawings, wherein:
- Fig. 1 illustrates a sectional view along a longitudinal axis of a trim element according to a first embodiment of the invention;
- Fig. 2 is a top and perspective view of a frame of the trim element of Fig. 1, the sectional plane of Fig. 1 being materialized by the plane I-I;
- Fig. 3 is an outer perspective view of a detail marked as III of Fig. 2;
- Fig. 4 is an inner perspective view of the element of Fig. 3;
- Fig. 5 is a top perspective view of a frame of a trim element according to a second embodiment of the invention;
- Fig. 6 is a top perspective view of an element of the frame of Fig. 5, before stamping; and
- Fig. 7 is an elevational view of the element of Fig. 6, after stamping.

In the description, the trim element 10 will be described as a dashboard trim element. It is understood that such an element may fill another member of the vehicle, such as a door interior, a seat, a steering wheel, or other member.

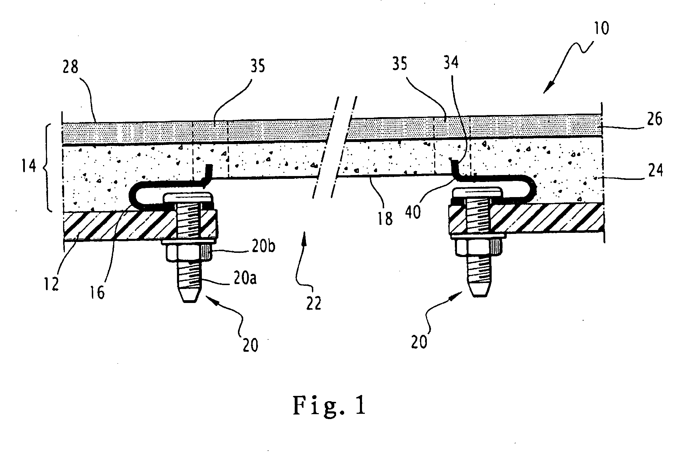

As visible in Fig. 1, the trim element 10 comprises a rigid supporting member, or support 12, a flexible covering member 14, a rigid frame 16, a flap 18 and attachment means 20 for attaching the frame 16 to the supporting member 12.

The supporting member 12 is for example a rigid insert made from plastics forming the body of a dashboard. It delimits a through-aperture 22 for deploying an inflatable bag device (not shown) more generally known as an airbag.

The flexible covering member 14 is intended to give pleasant touch and visual rendering to the dashboard. It covers the supporting member 12, the frame 16 and the flap 18. In the illustrated example, it consists of a foam layer 24 covered by a skin 26.

The foam making up the foam layer 24 is for example in polyurethane. The skin 26 has an outer surface 28 intended to be visible by the occupants of the passenger compartment of the motor vehicle.

Alternatively, the covering member 14 is formed by the skin 26 alone.

The flap 18 covers the aperture 22 and allows the covering member 14 to be torn during the deployment of the inflatable bag. The flap 18 is jointed with the frame 16 through one of its edges so as to be able to lift up during the deployment of the inflatable bag device.

In the illustrated example, the attachment means 20 are bolts each comprising a screw 20a and a nut 20b. Each screw 20a extends through the frame 16 and the support 12, and the frame 16 is maintained attached to the support 12 by means of the cooperation between each screw 20a and each nut 20b.

Alternatively, the attachment means 20 comprise rivets or clips.

The frame 16 is attached to the supporting member 12 at the periphery of the aperture 22. The frame 16 is inserted between the supporting member 12 and the covering member 14.

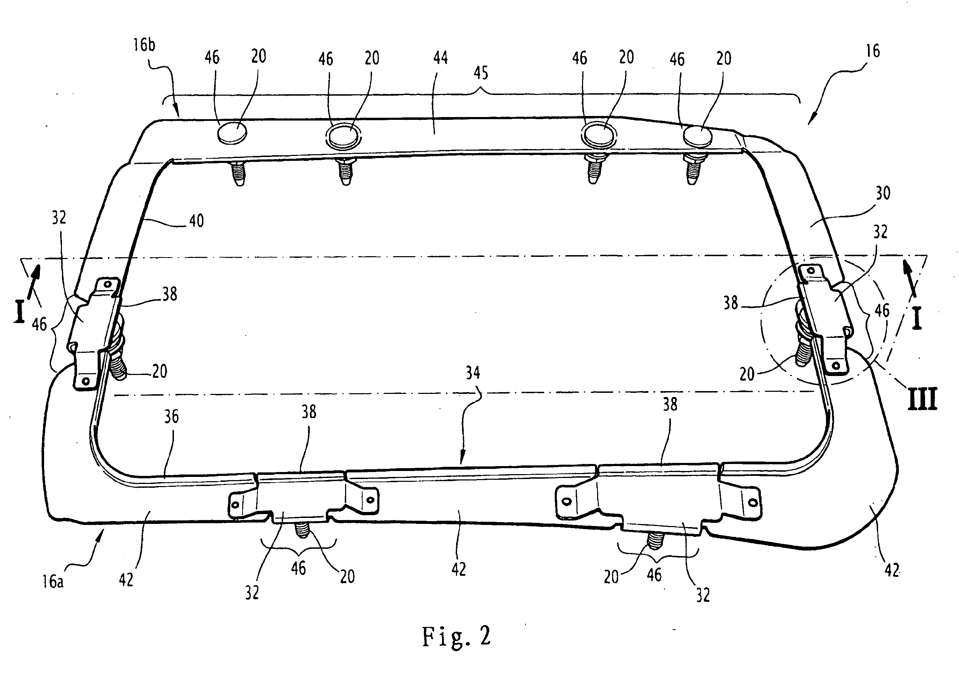

As visible in Fig. 2, the frame 16 has a general rectangular shape and extends in a longitudinal direction. The attachment means 20 of the frame 16 are distributed along the four sides of the frame 16. However, it is understood that such a shape of the frame 16 cannot be a limitation, the shape of the frame 16 depending above all on the shape of the aperture 22.

The frame 16 comprises a ribbed portion 16a and a joint portion 16b of the flap 18.

The ribbed portion 16a has a continuous rib 34 which, as visible in Fig. 1, extends from the frame 16, substantially perpendicularly to the latter, in the covering member 14, without emerging onto the exterior surface 28.

A weakening area 35 is thus defined in the covering member 14, above the ribbed portion 16a.

The rib 34 extends along a peripheral edge of the frame 16, preferably along the inner peripheral edge 40. In the illustrated example, the inner peripheral edge 40 runs along the edge of the aperture 22.

The flap 18 is jointed with the frame 16 along the joint portion 16b. The joint portion 16b does not have any rib intended for weakening the covering member 14.

The frame 16 comprises an annular rigid edge 30 extending along at least one portion of the periphery of the aperture 22. The term « annular » here is to be understood in the broad sense and is not limited to members with a circular shape, but also includes members with a rectangular shape, such as the edge 30 described here.

In the illustrated example, the annular edge 30 is formed with a single part extending all along the periphery of the aperture 22. Alternatively, the annular edge 30 is formed with at least two parts, one part forming the ribbed portion 16a of the frame 16, the other part forming the joint portion 16b of the frame 16, both parts being secured to each other or not being in contact with each other but together having a general annular shape.

The edge 30 consists of a ribbed portion 42, from which extends at least one portion of the rib 34, and a non-ribbed portion 44, mating the ribbed portion 42, not supporting any portion of the rib 34. The ribbed portion 42 and the non-ribbed portion 44 are therefore distinct from each other, but are at least partially made integral from the same material.

The non-ribbed portion 44 comprises a joint portion 45 of the flap 18, corresponding to the joint portion 16b of the frame 16, and attachment portions 46 supporting at least one portion of the attachment means 20. At least one part of the attachment portions 46 extends in the joint portion 45.

In the illustrated example, each screw 20a extends through an attachment portion 46. Each attachment portion 46 is thus fastened to the support 12 by an attachment means 20. The edge 30 does not have any other portion supporting attachment means 20.

In order to ensure a proper hold of the frame 16 on the support 12, the attachment means 20 should be uniformly distributed around the aperture 22, as close as possible to the edge of the aperture 22. Now, it is impossible to produce a portion of the rib 34 on a attachment portion 46 of the edge 30, since there is not enough material available between the attachment means 20 and the edge of the aperture 22 in this attachment portion 46. Thus, producing a continuous rib 34, extending over the entirety of the frame 16 except for the joint portion 16b, is a problem.

A first way to overcome this problem is shown in a first embodiment of the invention, illustrated in Figs. 1 to 4.

According to this first embodiment, the ribbed portion 42 is discontinuous and attachment portions 46 are inserted between the different portions of the ribbed portion 42. The frame 16 is attached to the support 12 exclusively via attachment portions 46.

Each attachment portion 46, except for those extending into the joint portion 45, is covered by a covering tab 32.

Each covering tab 32 extends above an attachment portion 46 located in the ribbed portion 16a of the frame 16 and covers the attachment means 20 associated with the attachment portions 46. Each covering tab 32 therefore extends between an attachment portion 46 of the edge 30 and the skin 26 of the covering layer 14.

The rib 34 then comprises a first portion 36 which extends onto the ribbed portion 42 of the edge 30, and a second portion 38 which extends on the covering tabs 32.

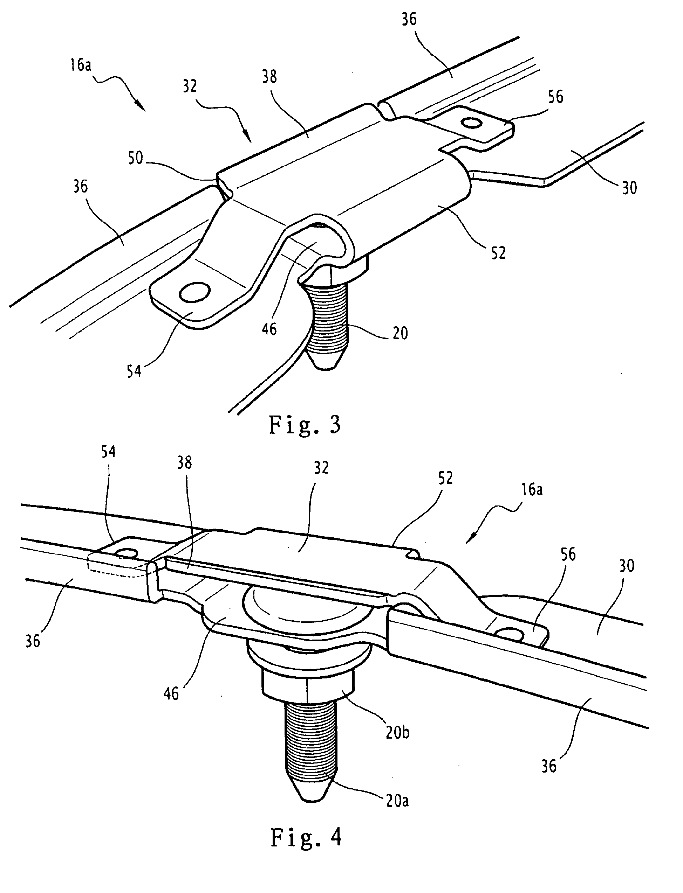

This assembly formed by a covering tab 32 and the attachment portion 46 which it covers will now be described in more detail, with reference to Figs. 3 and 4.

As visible in Fig. 3, the first 36 and the second 38 portions of the rib 34 extend in the continuity of each other.

The tab 32 and the edge 30 are made integral from the same material. The tab forms a folded portion of the edge 30, cut out in the edge 30. The tab 32 is formed by the material from the non-ribbed portion 44. This is particularly advantageous, since it limits the number of parts required for making the frame and does not require addition of material to the frame.

The rib 34 delimits an edge 50 of the tab 32. The tab 32 is connected to the edge 30 through an edge 52 opposite to the edge 50.

The tab 32 further has two strips 54, 56 each welded, riveted, clinched or crimped to an upper face of the edge 30.

By means of the rib extending from the frame into the covering member, the covering member is weakened in a weakening area bordering the aperture for deploying the inflatable bag device. Thus, in the case of deployment of the inflatable bag device, the covering member will be able to properly tear along the weakened area.

Further, as the rib is continuous, there is no point at which the covering member would be less weakened and therefore would not be as well torn.

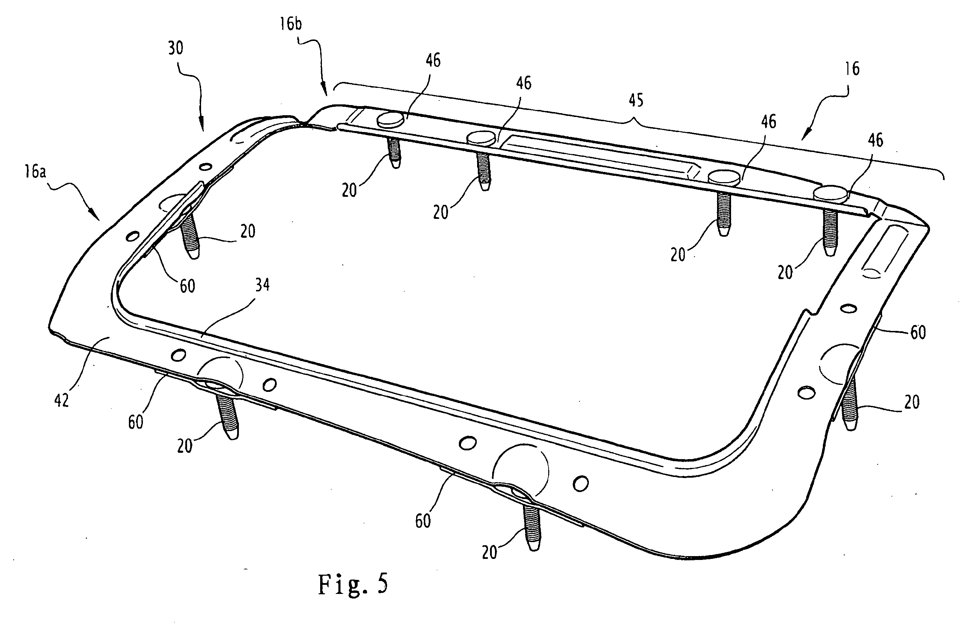

In a second embodiment of the trimming member 10, illustrated in Figs. 5 to 7, the ribbed portion 42 of the edge 30 is continuous and comprises the entirety of the rib 34. The rib 34 therefore extends continuously over the ribbed portion 42 of the edge 30.

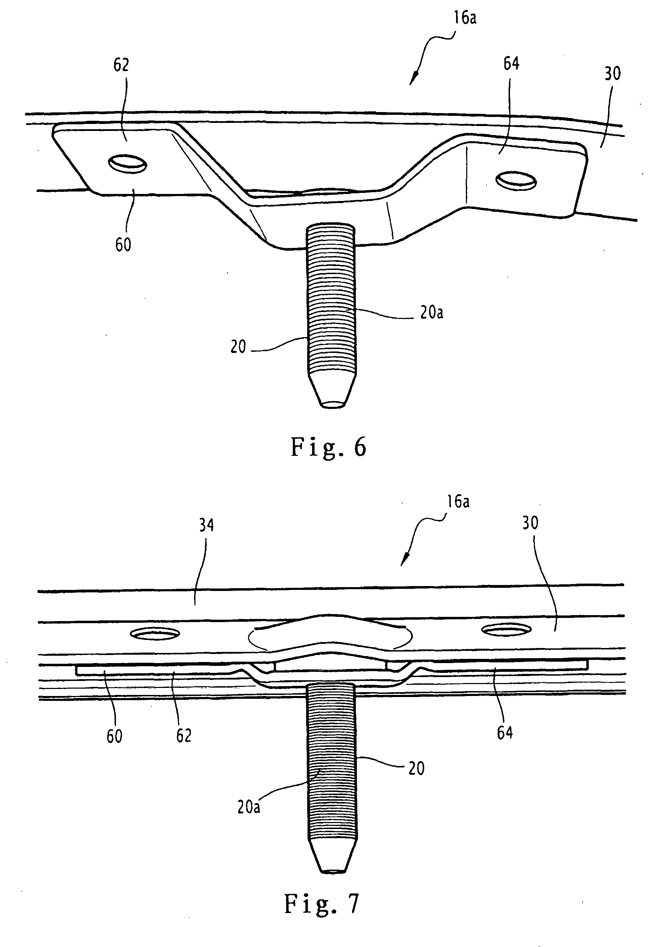

The frame 16 then comprises a plurality of attachment tabs 60 each attached below the ribbed portion 42. Each attachment tab 60 therefore extends between the ribbed portion 42 of the edge 30 and the support 12. One of these attachment tabs 60 will now be described in more detail, with reference to Figs. 6 and 7.

As visible in Fig. 6, the attachment tab 60 is crossed by attachment means 20. The attachment tab 60 is thus directly attached through the attachment means 20 to the support 12.

The attachment tab 60 is further welded, riveted, clinched or crimped, at its ends 62, 64, to a lower face of the edge 30. Thus, the frame 16 is attached to the support 12 via attachment tabs 60, for the attachment means 20 extending into the ribbed portion 16a of the frame 16.

The attachment means 20 not extending into the ribbed portion 16a extend through the edge 30 and therefore attach the edge 30 directly to the support 12.

The rib 34 thus extends continuously above a portion of the attachment means 20.

The method for making the frame 16, according to the second embodiment, will be briefly described with reference to Figs. 6 and 7.

Firstly, the edge 30 with the continuous rib 34 on the one hand and the attachment tabs 60 on the other hand are made separately.

Next, as visible in Fig. 6, the screws 20a of the attachment means 20 are introduced into a hole made for this purpose in the attachment tabs 60, and each attachment tab 60 is welded, crimped, clinched or riveted to the edge 30 so that the screw protrudes towards the supporting member 12.

Preferably, at least one assembly consisting of a screw 20a and of an attachment tab 60 is then stamped with the edge 30, so as to obtain the frame 16 as illustrated in Fig. 7.

By means of this method, the attachment tabs are securely attached to the edge and the risks of detachment are reduced.

Both embodiments described above may be combined in order to make a frame having a continuous rib.

The covering member 14 may also have a pre-cut (not shown) in the weakening area 35, facing the periphery of the aperture 22 and the ribbed portion 16a, so as to better control tearing during the deployment of the inflatable bag.

During deployment of the inflatable bag, the flap 18 applies a force against the covering member 14, which is torn along the weakening area 35. The tearing is therefore accomplished clearly exclusively facing the ribbed portion 16a. Material projections are thereby avoided.

As the rib 34 extends continuously, there is no point having lesser weakening in the weakening area 35. It is thus guaranteed that the tearing will clearly be accomplished in the whole weakening area 35.

## Claims

1. A motor vehicle trim element (10), of the type comprising a rigid supporting member (12) and a flexible covering member (14) covering the supporting member (12), the covering member (14) comprising a skin (26) intended to be visible by an occupant of the passenger compartment of the motor vehicle, the supporting member (12) comprising at least one aperture (22) allowing deployment of an inflatable bag device outwards from the trim element (10), a rigid frame (16) being attached to the supporting member (12) on the periphery of said aperture (22) by several attachment means (20), a flap (18) covering the aperture (22) being jointed with said frame (16), **characterized in that** the frame (16) comprises a continuous rib (34) extending from the frame (16) into the covering member (14), said rib (34) extending along at least one portion of the frame (16), and covering at least one portion of the attachment means (20).

2. The trim element (10) according to claim 1, **characterized in that** the frame (16) comprises a rigid edge (30) with a general annular shape extending along at least one portion of the periphery of the aperture (22), said edge (30) comprising at least one ribbed portion (42) comprising a first portion (36) of the rib (34), and at least one attachment portion (46) distinct from the or each ribbed portion (42), the or each attachment portion (46) being fastened to the supporting member (12) through an attachment means (20), and **in that** the frame (16) comprises at least one covering tab (32) extending between an attachment portion (20) and the skin (26), the or each covering tab (32) comprising a second portion (38) of the rib (34), the first (36) and the second (38) portion of the rib (34) extending in the continuity of each other.

3. The trim element (10) according to claim 2, **characterized in that** the or each covering tab (32) is riveted, crimped, clinched or welded to the edge (30).

4. The trim element (10) according to claim 2 or 3, **characterized in that** the edge (30) and the or each covering tab (32) are made integral from the same material.

5. The trim element (10) according to claim 4, **characterized in that** the or each covering tab (32) is a folded portion of the edge (30).

6. The trim element (10) according to claim 1, **characterized in that** the frame (16) comprises a rigid edge (30) with a general annular shape extending along at least one portion of the periphery of the aperture (22), said edge (30) comprising at least one continuous ribbed portion (42) comprising at least one continuous portion of the rib (34), and **in that** the frame (16) comprises at least one attachment tab (60), fastened to the supporting member (12) through one of the attachment means (20), the attachment tab (60) extending between a ribbed portion (42) of the edge (30) and the supporting member (12).

7. The trim element (10) according to claim 6, **characterized in that** the or each attachment tab (60) is riveted, crimped, clinched or welded to the edge (30).

8. The trim element (10) according to claim 6 or 7, **characterized in that** the or each assembly consisting of an attachment tab (60) and of the associated attachment means (20) is stamped with the edge (30).

9. The trim element (10) according to any of the preceding claims, **characterized in that** the attachment means (20) comprise screws and/or rivets.

10. The trim element (10) according to any of the preceding claims, **characterized in that** the rib (34) extends along an inner peripheral edge (40) of the frame (16).

11. A motor vehicle comprising a trim element (10) according to any of the preceding claims.

## Patentansprüche

1. Ein Kraftfahrzeug-Verkleidungselement (10) des Typs, der aufweist: ein steifes Stützelement (12) und ein flexibles Abdeckungselement (14), das das Stützelement (12) abdeckt, wobei das Abdeckungselement (14) eine Außenhaut (26) aufweist, die vorgesehen ist, um für einen Insassen des Fahrgastraums des Kraftfahrzeugs sichtbar zu sein, wobei das Stützelement (12) aufweist: mindestens eine Öffnung (22), die ein Entfalten einer aufblasbaren Sackvorrichtung von dem Verkleidungselement (10) aus nach außen ermöglicht, einen steifen Rahmen (16), der durch mehrere Befestigungsmittel (20) an dem Stützelement (12) an dem Umfang der Öffnung (22) angebracht ist, eine Klappe (18), die die Öffnung (22) bedeckt, die mit dem Rahmen (16) zusammengefügt ist, **dadurch gekennzeichnet, dass** der Rahmen (16) eine durchgehende Rippe (34) aufweist, die sich von dem Rahmen (16) in das Abdeckungselement (14) erstreckt, wobei sich die Rippe (34) entlang zumindest einem Abschnitt des Rahmens (16) erstreckt, und zumindest einen Abschnitt der Befestigungsmittel (20) bedeckt.

2. Das Verkleidungselement (10) gemäß Anspruch 1, **dadurch gekennzeichnet, dass** der Rahmen (16) einen steifen Rand (30) mit einer im Wesentlichen ringförmigen Form aufweist, der sich entlang zumindest einem Abschnitt des Umfangs der Öffnung (22) erstreckt, wobei der Rand (30) aufweist:
mindestens einen Rippenabschnitt (42), der einen ersten Abschnitt (36) der Rippe (34) aufweist, und mindestens einen Befestigungsabschnitt (46), der sich von dem oder jedem Rippenabschnitt (42) unterscheidet, wobei der oder jeder Befestigungsabschnitt (46) durch ein Befestigungsmittel (20) an dem Stützelement (12) befestigt ist, und dass der Rahmen (16) mindestens eine Abdeckungslasche (32) aufweist, die sich zwischen einem Befestigungsabschnitt (20) und der Außenhaut (26) erstreckt, wobei die oder jede Abdeckungslasche (32) einen zweiten Abschnitt (38) der Rippe (34) aufweist, wobei sich der erste (36) und der zweite (38) Abschnitt der Rippe (34) im Anschluss aneinander erstrecken.

3. Das Verkleidungselement (10) gemäß Anspruch 2, **dadurch gekennzeichnet, dass** die oder jede Abdeckungslasche (32) an den Rand (30) genietet, gecrimpt, geklammert oder geschweißt ist.

4. Das Verkleidungselement (10) gemäß Anspruch 2 oder 3, **dadurch gekennzeichnet, dass** der Rand (30) und die oder jede Abdeckungslasche (32) integral aus demselben Material hergestellt sind.

5. Das Verkleidungselement (10) gemäß Anspruch 4, **dadurch gekennzeichnet, dass** die oder jede Abdeckungslasche (32) ein Faltabschnitt des Randes (30) ist.

6. Das Verkleidungselement (10) gemäß Anspruch 1, **dadurch gekennzeichnet, dass** der Rahmen (16) einen steifen Rand (30) mit einer im Wesentlichen ringförmigen Form aufweist, der sich entlang zumindest einem Abschnitt des Umfangs der Öffnung (22) erstreckt, wobei der Rand (30) mindestens einen durchgehenden Rippenabschnitt (42) aufweist, der mindestens einen durchgehenden Abschnitt der Rippe (34) aufweist, und dass der Rahmen (16) mindestens eine Befestigungslasche (60) aufweist, die durch eines der Befestigungsmittel (20) an dem Stützelement (12) befestigt ist, wobei sich die Befestigungslasche (60) zwischen einem Rippenabschnitt (42) des Randes (30) und dem Stützelement (12) erstreckt.

7. Das Verkleidungselement (10) gemäß Anspruch 6, **dadurch gekennzeichnet, dass** die oder jede Befestigungslasche (60) an den Rand (30) genietet, gecrimpt, geklammert oder geschweißt ist.

8. Das Verkleidungselement (10) gemäß Anspruch 6 oder 7, **dadurch gekennzeichnet, dass** die oder jede Einrichtung, die aus einer Befestigungslasche (60) und aus dem zugeordneten Befestigungsmittel (20) besteht, mit dem Rand (30) geprägt ist.

9. Das Verkleidungselement (10) gemäß irgendeinem der vorhergehenden Ansprüche, **dadurch gekennzeichnet, dass** die Befestigungsmittel (20) Schrauben und/oder Nieten aufweisen.

10. Das Verkleidungselement (10) gemäß irgendeinem der vorhergehenden Ansprüche, **dadurch gekennzeichnet, dass** sich die Rippe (34) entlang einem Innenumfang (40) des Rahmens (16) erstreckt.

11. Ein Kraftfahrzeug, aufweisend ein Verkleidungselement (10) gemäß irgendeinem der vorhergehenden Ansprüche.

## Revendications

1. Elément de garniture intérieure (10) d'un véhicule à moteur, du type comprenant un élément de support rigide (12) et un élément de recouvrement souple (14) recouvrant l'élément de support (12), l'élément de recouvrement (14) comprenant un revêtement (26) prévu pour être visible par un occupant du compartiment de passagers du véhicule à moteur, l'élément de support (12) comprenant au moins une ouverture (22) permettant le déploiement d'un dispositif de coussin gonflable vers l'extérieur à partir de l'élément de garniture intérieure (10), un bâti rigide (16) étant attaché à l'élément de support (12) sur la périphérie de ladite ouverture (22) par plusieurs moyens de fixation (20), un rabat (18) recouvrant l'ouverture (22) étant articulé avec ledit bâti (16), **caractérisé en ce que** le bâti (16) comprend une nervure continue (34) s'étendant à partir du bâti (16) dans l'élément de recouvrement (14), ladite nervure (34) s'étendant le long d'au moins une partie du bâti (16) et recouvrant au moins une partie des moyens de fixation (20).

2. Elément de garniture intérieure (10) selon la revendication 1, **caractérisé en ce que** le bâti (16) comprend un bord rigide (30) avec une forme annulaire générale s'étendant le long d'au moins une partie de la périphérie de l'ouverture (22), ledit bord (30) comprenant au moins une partie nervurée (42) comprenant une première partie (36) de la nervure (34), et au moins une partie de fixation (46) distincte de la ou de chaque partie nervurée (42), la ou chaque partie de fixation (46) étant fixée à l'élément de support (12) par le biais d'un moyen de fixation (20) et **en ce que** le bâti (16) comprend au moins une languette de recouvrement (32) s'étendant entre une partie de fixation (20) et le revêtement (26), la ou chaque languette de recouvrement (32) comprenant une seconde partie (38) de la nervure (34), la première (36) et la seconde (38) partie de la nervure (34) s'étendant dans la continuité l'une de l'autre.

3. Elément de garniture intérieure (10) selon la revendication 2, **caractérisé en ce que** la ou chaque languette de recouvrement (32) est rivetée, sertie, rivée ou soudée au bord (30).

4. Elément de garniture intérieure (10) selon la revendication 2 ou 3, **caractérisé en ce que** le bord (30) et la ou chaque nervure de recouvrement (32) sont faits solidaires à partir du même matériau.

5. Elément de garniture intérieure (10) selon la revendication 4, **caractérisé en ce que** la ou chaque languette de recouvrement (32) est une partie pliée du bord (30).

6. Elément de garniture intérieure (10) selon la revendication 1, **caractérisé en ce que** le bâti (16) comprend un bord rigide (30) avec une forme annulaire générale s'étendant le long d'au moins une partie de la périphérie de l'ouverture (22), ledit bord (30) comprenant au moins une partie nervurée continue (42) comprenant au moins une partie continue de la nervure (34) et **en ce que** le bâti (16) comprend au moins une languette de fixation (60), fixée à l'élément de support (12) par le biais de l'un des moyens de fixation (20), la languette de fixation (60) s'étendant entre une partie nervurée (42) du bord (30) et l'élément de support (12).

7. Elément de garniture intérieure (10) selon la revendication 6, **caractérisé en ce que** la ou chaque languette de fixation (60) est rivetée, sertie, rivée ou soudée au bord (30).

8. Elément de garniture intérieure (10) selon la revendication 6 ou 7, **caractérisé en ce que** le ou chaque ensemble se composant d'une languette de fixation (60) et des moyens de fixation (20) associés, est poinçonné avec le bord (30).

9. Elément de garniture intérieure (10) selon l'une quelconque des revendications précédentes, **caractérisé en ce que** les moyens de fixation (20) comprennent des vis et/ou des rivets.

10. Elément de garniture intérieure (10) selon l'une quelconque des revendications précédentes, **caractérisé en ce que** la nervure (34) s'étend le long d'un bord périphérique interne (40) du bâti (16).

11. Véhicule automobile comprenant un élément de garniture intérieure (10) selon l'une quelconque des revendications précédentes.
